# EUROPÄISCHE PATENTSCHRIFT

(11) **EP 4 391 331 B1**
(45) Veröffentlichungstag und Bekanntmachung des Hinweises auf die Patenterteilung: **30.07.2025**
(21) Anmeldenummer: 22215127.6
(22) Anmeldetag: 20.12.2022
(51) Int. Cl.: H02K 15/066, H02K 15/043, H02K 15/085, H02K 15/09

(54) **VERFAHREN UND VORRICHTUNG ZUM AUFNEHMEN VON SPULENMATTEN BEIM HERSTELLEN EINES BAUTEILS EINER ELEKTRISCHEN MASCHINE**
METHOD AND DEVICE FOR RECEIVING COIL MATS IN THE PRODUCTION OF A COMPONENT OF AN ELECTRIC MACHINE
PROCÉDÉ ET DISPOSITIF DE RÉCEPTION DE NATTES DE BOBINES LORS DE LA FABRICATION D'UN COMPOSANT D'UNE MACHINE ÉLECTRIQUE

(43) Veröffentlichungstag der Anmeldung: 26.06.2024
(73) Patentinhaber: Grob-Werke GmbH & Co. KG, 87719 Mindelheim (DE)
(72) Erfinder: Schmölz, Markus, 87668 Rieden (DE); Fendt, Dominik, 86513 Mindelzell (DE); Ziegler, Manfred, 86856 Hiltenfingen (DE); Forkl, Thomas, 86441 Zusmarshausen (DE)
(74) Vertreter: KASTEL Patentanwälte PartG mbB

(56) Entgegenhaltungen:
- US-A1- 2009 001 841
- US-B2- 7 281 312

## Beschreibung

Die Erfindung betrifft ein im Zuge der Herstellung eines Bauteils einer elektrischen Maschine durchzuführendes Spulenmattenaufnahmeverfahren zum Aufnehmen einer Spulenmatte von einer sich länglich erstreckenden Halterung und Einfügen der Spulenmatte in eine ringförmige Anordnung von Nuten, die sich nach außen öffnen. Weiter betrifft die Erfindung ein Herstellverfahren zum Herstellen eines Statorbauteils mit Spulenwicklung, bei dem ein solches Spulenmattenaufnahmeverfahren durchgeführt wird. Weiter betrifft die Erfindung eine Spulenmattenaufnahmevorrichtung zum Aufnehmen einer Spulenmatte im Zuge der Herstellung eines Bauteils einer elektrischen Maschine. Weiter betrifft die Erfindung eine Spulenmattenüberführungsstation für eine Herstellanlage zum Herstellen eines Bauteils einer elektrischen Maschine, wobei die Spulenmattenüberführungsstation zum Überführen einer linearen Spulenmatte in einen aufgewickelten Zustand dient und eine derartige Spulenmattenaufnahmevorrichtung umfasst. Weiter betrifft die Erfindung eine Steuerung und ein Computerprogramm für eine derartige Spulenmattenaufnahmevorrichtung oder eine derartige Spulenmattenüberführungsstation. Schließlich betrifft die Erfindung eine Herstellanlage zum Herstellen eines Bauteils einer elektrischen Maschine mit einer derartigen Spulenmattenaufnahmevorrichtung und/oder einer derartigen Spulenmattenüberführungsstation.

Die Erfindung liegt auf dem Gebiet von elektrischen Maschinen wie beispielsweise Elektromotoren oder Generatoren. Wenigstens ein Bauteil einer solchen elektrischen Maschine, wie z.B. ein Stator oder ein Rotor, weist eine Spulenwicklung auf. Bei einer Verfahrensweise zum Herstellen eines Bauteils mit einer solchen Spulenwicklung wird eine solche Spulenwicklung außerhalb des Bauteils vorgefertigt und dann in das Bauteil eingefügt.

Beispielsweise wird eine Wellenwicklung außerhalb des Bauteils, wie insbesondere eines Stators, vorgefertigt, z.B. als eine lineare Spule, im Folgenden Spulenmatte genannt.

Zur Begriffsdefinition, zum technologischen Hintergrund und zum Stand der Technik wird auf folgende Literaturstellen verwiesen:
[1] WO 2019/020148 A1
[2] WO 2019/166061 A1
[3] US 2017/0324294 A1
[4] US 2009/0322178 A1
[5] WO 2018/019970 A1
[6] WO 2020/187363 A1
[7] EP 3 886 303 A1
[8] EP 3 661 017 A1
[9] US 2020/0389076 A1
[10] US 2009/001841 A1

Aus [1] bis [4] sind Beispiele für Spulenmatten zum Bilden einer Spulenwicklung eines Stators als Beispiel für ein Bauteil einer elektrischen Maschine bekannt. Derartige Spulenmatten, wie sie auch bei Ausführungsbeispielen der Erfindung einzusetzen sind, bestehen z.B. aus mehreren einzelnen S-förmig gebogenen mit einer äußeren Isolationsschicht versehenen Leitern, insbesondere in Form von Kupferdrähten, vorzugsweise mit rechteckigem Querschnitt, die jeweils gerade Drahtabschnitte aufweisen, welche mit Wickelköpfen verbunden sind. Der gerade Drahtabschnitt befindet sich später in der Bauteilnut, wie insbesondere Statornut, und im sogenannten Wickelkopf springt der Leiter oder Draht eine entsprechende Anzahl Nuten.

Aus [5] bis **[10]** sind Vorrichtungen und Verfahren zum Aufnehmen einer Spulenmatte und zum Übertragen der Spulenmatte in ein Bauteil bekannt. Insbesondere ist hierzu ein Fügewerkzeug mit einer Anordnung sich radial nach außen öffnender Nuten zum Einfügen einer Spulenmatte in ein Blechpaket eines Stators vorgesehen. Die Spulenmatte wird z.B. auf einer linear ausgebildeten Halterung bereitgestellt; das Fügewerkzeug nimmt die Spulenmatte in seinen Nuten auf und überführt sie in das Blechpaket.

Ausgehend vom Stand der Technik nach [5] bis **[10]** hat sich die Erfindung zur Aufgabe gestellt, eine schonendere, genauere und zuverlässigere Überführung einer Spulenmatte von einem linearen Zustand zu einem aufgewickelten Zustand mit einem verringerten Risiko einer Beschädigung von Drähten der Spulenmatte zu ermöglichen.

Zum Lösen dieser Aufgabe schafft die Erfindung ein Spulenmattenaufnahmeverfahren nach Anspruch 1 sowie eine Spulenmattenaufnahmevorrichtung nach dem Nebenanspruch. Ein Herstellverfahren unter Verwendung eines solchen Spulenmattenaufnahmeverfahrens sowie eine Steuerung und ein Computerprogramm beinhaltend Anweisungen zum Durchführen des Verfahrens sowie eine Spulenmattenüberführungsstation und eine damit versehene Herstellanlage, die die Spulenmattenaufnahmevorrichtung beinhalten, sind Gegenstand der weiteren Nebenansprüche. Vorteilhafte Ausgestaltungen sind Gegenstand der Unteransprüche.

Die Erfindung schafft gemäß einem ersten Aspekt davon ein im Zuge der Herstellung eines Bauteils einer elektrischen Maschine durchzuführendes Spulenmattenaufnahmeverfahren zum Aufnehmen einer Spulenmatte von einer sich länglich erstreckenden Halterung und Einfügen der Spulenmatte in eine ringförmige Anordnung von Nuten, die sich nach außen öffnen, mit den Schritten:
a) Bereitstellen der Spulenmatte auf der sich länglich erstreckenden Halterung, die eine Reihe von Zähnen mit Zahnlücken dazwischen aufweist, so dass geradlinige Drahtabschnitte der Spulenmatte in den Zahnlücken aufgenommen sind,
b) Bereitstellen einer um eine Drehachse drehbaren Dreheinheit mit der ringförmigen Anordnung von Nuten, die durch Nutbegrenzungselemente begrenzt sind, welche sich mit zumindest einer Richtungskomponente radial erstrecken,
c) relatives Bewegen von Dreheinheit und Halterung in Längsrichtung der Halterung und Rollen der Dreheinheit über die Halterung derart, dass in einem bogenförmigen Übergabebereich mehrere Nuten mit mehreren Zahnlücken ausgerichtet werden, um die Drahtabschnitte der Spulenmatte von den Zahnlücken in die Nuten zu übergeben und bei der Übergabe zu führen,
d) Überführen der geradlinigen Drahtabschnitte von den Zahnlücken im Übergabebereich zu den damit ausgerichteten Nuten, und
e) Einstellen
   e1) der Höhen der Zähne und/oder
   e2) der radialen Längen der Nutbegrenzungselemente

im Übergabebereich derart, dass die Höhen der Zähne im Fall e1) oder die Längen der Nutbegrenzungselemente im Fall e2) im Zentrum des Übergangsbereichs jeweils kleiner als an den Randbereichen des Übergangsbereichs sind.

Vorzugsweise umfasst Schritt a):
a1) Bereitstellen der Halterung mit sich in einer Richtung quer zur Längserstreckung derart bewegbaren Zähnen, dass die Höhe der Zähne veränderbar ist.

Vorzugsweise umfasst Schritt a):
a2) Bereitstellen der Halterung als geradliniger Rechen mit einer Kammstruktur, die wenigstens ein oder mehrere nebeneinander angeordnete Reihen von Zähnen aufweist.

Vorzugsweise umfasst Schritt a):
a3) Bereitstellen der Halterung mit Aktoren zur unterschiedlichen Bewegung der Zähne, um die Höhe einzeln einzustellen.

Vorzugsweise umfasst Schritt a):
a4) Bereitstellen der Halterung mit elastisch derart gelagerten Zähnen, dass deren Höhe einzeln durch Kontakt von außen einstellbar ist.

Vorzugsweise umfasst Schritt b):
Bereitstellen der Dreheinheit in Form eines Fügedorns oder Fügewerkzeugs, mittels welchem die aufgenommene Spulenmatte in ein Bauteil mit sich nach innen öffnenden Bauteilnuten überführbar ist.

Vorzugsweise umfasst Schritt e):
e3) Einstellen der Höhen und/oder der Längen derart, dass sie sich vom Zentrum des Übergabebereichs jeweils nach außen gesehen allmählich vergrößern.

Vorzugsweise umfasst Schritt e):
e4) Einstellen der Höhen und/oder Längen derart, dass die Bogenlänge des Übergabebereichs gegenüber einem Zustand mit gleichen Höhen und Längen vergrößert ist oder dass ein Abstand zwischen den Zahnlücken und den Nuten weiter außen im Übergabebereich gegenüber einem Zustand mit gleichen Höhen und Längen verringert oder eliminiert ist.

Vorzugsweise umfasst Schritt e):
e5) aktives Einfahren oder Ausfahren von Zähnen und/oder Nutbegrenzungselementen.

Vorzugsweise umfasst Schritt e):
e6) passives Einfahren oder Ausfahren elastisch gehaltener Zähne und/oder Nutbegrenzungselemente beim relativen Bewegen von Halterung und darin eintauchender Dreheinheit und/oder von Dreheinheit und darin eintauchender Halterung.

Vorzugsweise umfasst Schritt e) im Fall e1):
e1a) Ausfahren von Zähnen außerhalb des Zentrums des Übergabebereichs.

Vorzugsweise umfasst Schritt e) im Fall e1):
e1b) Einfahren von Zähnen im Zentrum des Übergabebereichs.

Vorzugsweise umfasst Schritt e) im Fall e1):
e1c) Einstellen der Höhen der Zähne im Übergabebereich so, dass Zähne umso weiter ausgefahren sind, je weiter sie vom Zentrum entfernt sind.

Vorzugsweise umfasst Schritt e) im Fall e1):
e1d) Einstellen der Höhen der Zähne im Übergabebereich so, dass Zähne umso weiter eingefahren sind, je näher sie am Zentrum liegen.

Vorzugsweise umfasst Schritt e) im Fall e2):
e2a) Ausfahren von Nutbegrenzungselementen außerhalb des Zentrums des Übergabebereichs.

Vorzugsweise umfasst Schritt e) im Fall e2):
e2b) Einfahren von Nutbegrenzungselementen im Zentrum des Übergabebereichs.

Vorzugsweise umfasst Schritt e) im Fall e2):
e2c) Einstellen der radialen Erstreckung der Nutbegrenzungselemente im Übergabebereich so, dass Nutbegrenzungselemente umso weiter ausgefahren sind, je weiter sie vom Zentrum entfernt sind.

Vorzugsweise umfasst Schritt e) im Fall e2):
e2d) Einstellen der radialen Erstreckung der Nutbegrenzungselemente im Übergabebereich so, dass Nutbegrenzungselemente umso weiter eingefahren sind, je näher sie am Zentrum liegen.

Gemäß einem weiteren Aspekt schafft die Erfindung ein Herstellverfahren zum Herstellen eines Statorbauteils mit Spulenwicklung, umfassend:
Durchführen des Spulenmattenaufnahmeverfahrens nach einer der voranstehenden Ausgestaltungen zum Einfügen der Spulenmatte auf ein Fügewerkzeug, relatives Einfahren des mit der Spulenmatte versehenen Fügewerkzeugs in ein ringförmiges Bauteil mit einer Anordnung nach innen öffnender Bauteilnuten und Überführen der Spulenmatte von dem Fügewerkzeug in das Bauteil.

Gemäß einem weiteren Aspekt schafft die Erfindung eine Spulenmattenaufnahmevorrichtung zum Aufnehmen einer Spulenmatte im Zuge der Herstellung eines Bauteils einer elektrischen Maschine, umfassend:
eine sich länglich erstreckende Halterung zum Bereitstellen und Halten einer linear angeordneten Spulenmatte, welche Halterung eine Reihe von Zähnen mit Zahnlücken dazwischen aufweist, in denen geradlinige Drahtabschnitte der Spulenmatte aufnehmbar sind,
eine um eine Drehachse drehbare Dreheinheit mit einer ringförmigen Anordnung von Nuten, die sich nach außen erstrecken und in die die geradlinigen Drahtabschnitte einfügbar sind und die durch sich radial erstreckende Nutbegrenzungselemente begrenzt sind,
eine Bewegungseinrichtung zum relativen Bewegen der Dreheinheit und der Halterung in Längsrichtung der Halterung und zum Rollen der Dreheinheit über die Halterung, wobei die Bewegungseinrichtung dazu eingerichtet ist, beim Rollen der Dreheinheit über die Halterung in einem Übergabebereich mehrere Nuten mit mehreren Zahnlücken zum Übergeben der Drahtabschnitte und Führen der Drahtabschnitte beim Übergeben auszurichten,
wobei
   aa) die Höhe der jeweiligen Zähne der Halterung in dem Übergabebereich und/oder
   bb) die radiale Erstreckung der jeweiligen Nutbegrenzungselemente in dem Übergabebereich während dem Rollen jeweils einzeln einstellbar und anpassbar sind.

Es ist bevorzugt, dass die Halterung als geradliniger Rechen mit einer Kammstruktur ausgebildet ist, die eine oder mehrere nebeneinander angeordnete Reihen der Zähne aufweist.

Es ist bevorzugt, dass die Halterung mit individuell in Richtung quer zur Längserstreckung bewegbaren Zähnen ausgebildet ist.

Es ist bevorzugt, dass die Halterung durch die Bewegungseinrichtung in Längsrichtung verschiebbar ist.

Es ist bevorzugt, dass die Halterung Aktoren zum einzelnen Bewegen der Zähne zum Einstellen deren Höhe aufweist.

Es ist bevorzugt, dass die Halterung elastisch bewegbar gelagerte Zähne aufweist, die durch Kontakt mit der Dreheinheit und/oder einer (mechanischen) Steuerkurve einzeln in der Höhe einstellbar sind.

Es ist bevorzugt, dass die Halterung bewegbar gelagerte Zähne aufweist, die durch Kontakt mit einer Steuerkurve einzeln in der Höhe einstellbar sind. Vorzugsweise weist die Spulenmattenaufnahmevorrichtung eine Steuerkurve auf, zu der die Halterung relativ beweglich ist, wobei an den Zähnen Kurvenfolgeelemente in Kontakt mit der Steuerkurve vorgesehen sind.

Es ist bevorzugt, dass die Dreheinheit als Fügedorn oder Fügewerkzeug zum Einfügen der aufgenommenen Spulenmatte in nach innen öffnende Bauteilnuten eines Bauteils ausgebildet ist.

Es ist bevorzugt, dass die Dreheinheit Aktoren zum einzelnen Bewegen der Nutbegrenzungselemente aufweist.

Es ist bevorzugt, dass die Dreheinheit elastisch in radialer Richtung bewegbare Nutbegrenzungselemente aufweist, die durch Kontakt mit Zähnen der Halterung und/oder mit einer Steuerkurve einzeln in der radialen Erstreckung einstellbar sind.

Gemäß einem weiteren Aspekt schafft die Erfindung eine Spulenmattenüberführungsstation für eine Herstellanlage zum Herstellen eines Bauteils einer elektrischen Maschine, zum Überführen einer linearen Spulenmatte in einen aufgewickelten Zustand, umfassend eine Spulenmattenaufnahmevorrichtung nach einer der voranstehenden Ausgestaltungen und eine Steuerung, die dazu eingerichtet ist, die Spulenmattenaufnahmevorrichtung zur Durchführung des Spulenmattenaufnahmeverfahrens nach einer der voranstehenden Ausgestaltungen anzusteuern.

Gemäß einem weiteren Aspekt schafft die Erfindung eine Steuerung für eine Spulenmattenaufnahmevorrichtung nach einer der voranstehenden Ausgestaltungen, wobei die Steuerung dazu eingerichtet ist, die Spulenmattenaufnahmevorrichtung zur Durchführung des Spulenmattenaufnahmeverfahrens nach einer der voranstehenden Ausgestaltungen anzusteuern.

Gemäß einem weiteren Aspekt schafft die Erfindung ein Computerprogramm, umfassend maschinenlesbare Steueranweisungen, die eine Spulenmattenaufnahmevorrichtung nach einer der voranstehenden Ausgestaltungen dazu veranlassen, das Spulenmattenaufnahmeverfahren nach einer der voranstehenden Ausgestaltungen durchzuführen.

Gemäß einem weiteren Aspekt schafft die Erfindung eine Herstellanlage zur Herstellung eines mit einer Spulenwicklung versehenen Statorbauteils, umfassend
eine Spulenmattenüberführungsstation gemäß der voranstehenden Ausgestaltung, wobei die Dreheinheit als Fügewerkzeug ausgebildet ist, und eine Einrichtung zum relativen Einfügen des Fügewerkzeugs in ein ringförmiges Blechpaket und zum Überführen der Spulenwicklung von dem Fügewerkzeug in das Blechpaket.

Das Spulenmattenaufnahmeverfahren gemäß Ausführungsformen der Erfindung ist insbesondere zum Aufnehmen der Spulenmatte auf ein Fügewerkzeug, wie z.B. aus [5] bis [9] bekannt, durchführbar, wobei das Fügewerkzeug die Anordnung von Nuten aufweist. Es wäre aber auch denkbar, mit dem Spulenmattenaufnahmeverfahren eine Spulenmatte unmittelbar auf nach außen öffnende Bauteilnuten eines Rotorkörpers oder eines Stators eines Außenläufermotors zu überführen.

Die Nuten der Anordnung sich nach außen öffnender Nuten können radial verlaufen, wobei die Nutbegrenzungselemente, die z.B. (vorzugsweise radial bewegbare) Lamellen eines Fügedorns sein können, sich insbesondere in radialer Richtung erstrecken. Es sind auch Ausführungen denkbar, bei denen die Nuten nicht streng radial sind, sondern die (verlängerte) Längsachse der Nuten nicht durch die Mitte der Anordnung, beispielsweise durch die Mitte eines Fügedorns verläuft, ebenso wäre dann auch die Mittelachse der Lamellen nicht exakt radial.

Bei einigen Ausführungsformen wird die Anordnung von Nuten an einem Fügedorn oder einem sonstigen Fügewerkzeug vorgesehen, mittels dem dann die aufgenommene Spulenmatte in nach innen öffnende Nuten eines Bauteils überführbar sind. Das Bauteil kann insbesondere ein Bauteil einer elektrischen Maschine, wie z.B. ein Blechpaket eines Stators mit Statornuten sein. Das Bauteil kann aber auch eine Zwischenhandlingsvorrichtung zum Fügen in den Stator eines Außenläufermotors sein. Beispielsweise wird die Spulenmatte vom Fügedorn auf ein Zwischenhandlingswerkzeug überführt und damit in einen Stator eines Außenläufermotors überführt, bei dem die Statornuten radial nach außen öffnen. Beispiele für das "Bauteil" sind demnach bei einem Innenläufermotor der Stator oder dessen Blechpaket, bei einem Außenläufermotor hingegen das Zwischenhandlingwerkzeug. Im letzteren Fall ist "Bauteil" dann allerdings unterschiedlich vom herzustellenden Statorbauteil.

Bevorzugte Ausführungsformen der Erfindung betreffen eine Aufnahme für Wellenwickeldrähte mit beweglicher Führung.

Vorzugsweise werden Ausführungsformen der Erfindung bei einer Herstellung eines Bauteils einer elektrischen Maschine, wie insbesondere eines Stators oder Rotors, verwendet, welches Bauteil mit einer Spulenwicklung versehen ist, die durch eine Wellenwicklung realisiert ist. Bei einer Wellenwicklung werden Drähte in einer Halterung wie z.B. in einem Rechen zu Matten gebildet und im Anschluss auf eine mit Nuten (bzw. mit Lamellen) versehene Dreheinheit (wie z.B. einen Rotor, auf den die Spulenwicklung aufzuwickeln ist oder einen Dorn, insbesondere Aufrolldorn, als Fügewerkzeug) aufgewickelt. Dabei ist eine exakte Übergabe von Halterung zu Dreheinheit entscheidend. Insbesondere bewegt sich die Halterung dabei relativ zur Dreheinheit linear und synchron zur Umfangsgeschwindigkeit der Dreheinheit. In einem Übergabebereich werden dann die Drähte an die Dreheinheit wie z.B. den Dorn übergeben.

Im Stand der Technik sind die Zähne der Halterung wie z.B. Rechenzähne unbeweglich (in vertikaler Richtung) ausgeführt.

Um eine exakte Übergabe zu gewährleisten, sollten bei der Übergabe der Drähte von Halterung zur Aufroll-Dreheinheit die Drähte zu jedem Zeitpunkt von Zähnen der Halterung und/oder von Lamellen oder dergleichen Nutbegrenzungselementen der Dreheinheit geführt sein. Andernfalls würden die Drähte bei der Übergabe die Führung verlieren. Die Drähte könnten in eine falsche Nut gelangen oder beschädigt werden. Aufgrund der geometrischen Gestaltung - runder Dorn zu linearem Rechen - ist die Führung der Drähte im Stand der Technik nur in einem sehr kleinem Bogensegment gegeben.

Bei der Übergabe des Drahtes von der Halterung (z.B. Rechen) in die Dreheinheit (z.B. Aufrolldorn, insbesondere verwendbar als Fügewerkzeug) muss im Stand der Technik der gesamte Hub in einem kurzen Bogensegment erfolgen - was eine hohe Steigung bedingt. Dadurch entstehen große Kräfte und Belastungen auf den Draht. Insbesondere die Isolierung des Drahtes kann hier beschädigt werden.

Mit Ausführungsformen der Erfindung lässt sich dagegen der Übergabebereich vergrößern, sodass die Kräfte auf den Draht reduziert werden können.

Bei einigen Ausführungsformen passt sich die Halterung durch eine axiale Bewegung der Zähne an den Radius der Dreheinheit an. Z.B. werden einige Zähne insbesondere am Anfang und Ende des Übergabebereichs angehoben.

Bei bevorzugter Ausführungsformen der Erfindung wird der Übergabebereich im Vergleich zu den entsprechenden Vorrichtungen und Verfahren im Stand der Technik vergrößert; der Hub der Drähte kann hierdurch in einem größeren Bogensegment erfolgen, was zu einer kleineren Steigung führt.

Die Kräfte auf den Draht können wesentlich reduziert werden. Eine genauere Übergabe des Drahtes kann erfolgen. Weniger Beschädigungen und weniger fehlerhaftes Aufrollen sind die Folge.

Ausführungsbeispiele werden im Folgenden anhand der beigefügten Zeichnungen näher erläutert. Darin zeigt:
- Fig. 1: eine schematische Teilansicht einer herkömmlichen Spulenmattenaufnahmevorrichtung zur Aufnahme einer linear bereitgestellten Spulenmatte auf eine ringförmige Anordnung radial nach außen öffnender Nuten;
- Fig. 2: eine schematische Teilansicht einer Spulenmattenaufnahmevorrichtung zur Aufnahme einer linear bereitgestellten Spulenmatte auf eine ringförmige Anordnung radial nach außen öffnender Nuten gemäß einer Ausgestaltung der Erfindung zur Verdeutlichung eines damit durchführbaren Spulenmattenaufnahmeverfahrens;
- Fig. 3: eine schematische Teilansicht einer Spulenmattenaufnahmevorrichtung gemäß einer ersten Ausführungsform der Erfindung;
- Fig. 4: eine schematische Teilansicht einer Spulenmattenaufnahmevorrichtung gemäß einer zweiten Ausführungsform der Erfindung;
- Fig. 5: eine schematische Teilansicht einer Spulenmattenaufnahmevorrichtung gemäß einer dritten Ausführungsform der Erfindung;
- Fig. 6: eine schematische Teilansicht einer Spulenmattenaufnahmevorrichtung gemäß einer vierten Ausführungsform der Erfindung;
- Fig. 7: eine schematische Teilansicht einer Spulenmattenaufnahmevorrichtung zur Aufnahme einer linear bereitgestellten Spulenmatte auf eine ringförmige Anordnung radial nach außen öffnender Nuten gemäß einer weiteren Ausgestaltung der Erfindung zur Verdeutlichung einer Variante des Spulenmattenaufnahmeverfahrens;
- Fig. 8: eine schematische Teilansicht einer Spulenmattenaufnahmevorrichtung gemäß einer fünften Ausführungsform der Erfindung;
- Fig. 9: eine schematische Teilansicht einer Spulenmattenaufnahmevorrichtung gemäß einer sechsten Ausführungsform der Erfindung;
- Fig. 10: eine schematische Darstellung einer Variante für eine bei der Spulenmattenaufnahmevorrichtung und dem Spulenmattenaufnahmeverfahren einsetzbaren Dreheinheit mit einer Anordnung nach außen öffnender Nuten; und
- Fig. 11: ein schematisches Blockschaltbild einer Herstellanlage zur Herstellung eines mit einer Spulenwicklung versehenen Bauteils einer elektrischen Maschine, wie insbesondere zur Herstellung eines Stators;

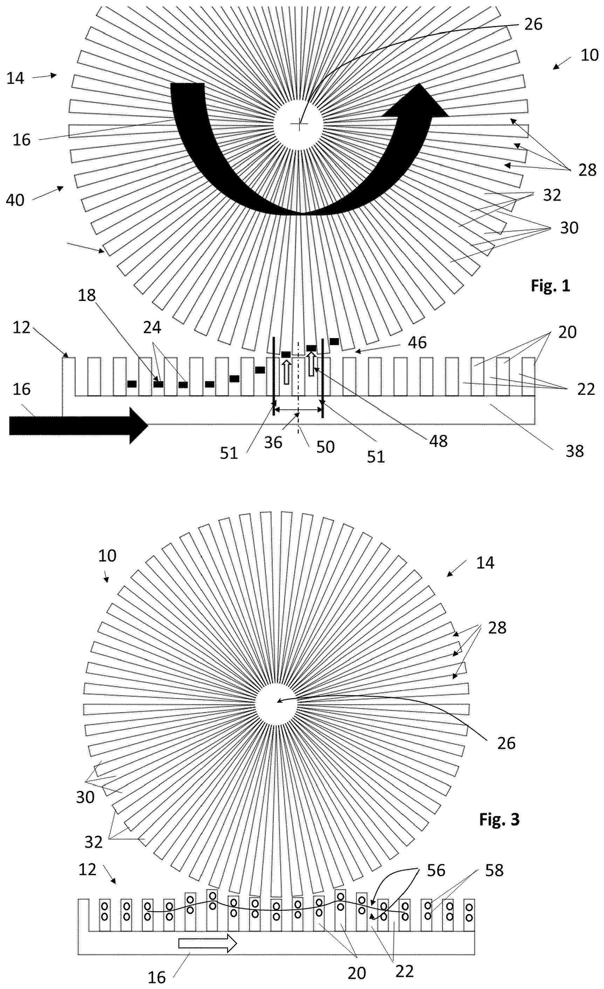

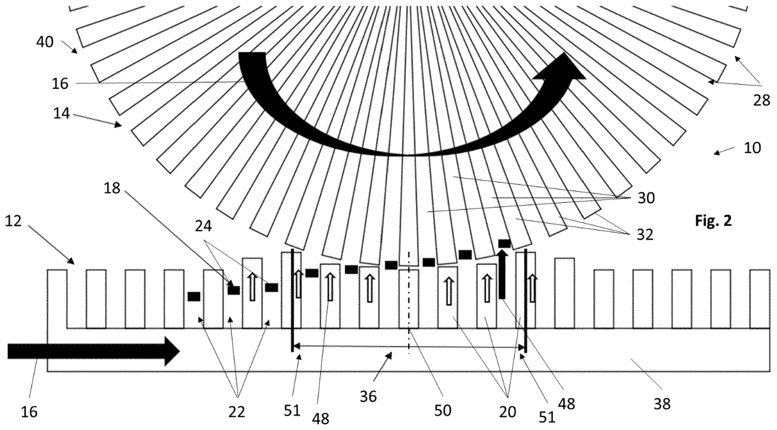

In den Figuren 1 bis 9 sind unterschiedliche Ausgestaltungen einer Spulenmattenaufnahmevorrichtung 10 zum Aufnehmen einer Spulenmatte 18 bei einer Herstellung eines Bauteils einer elektrischen Maschine dargestellt. In Fig. 1 ist eine herkömmliche Spulenmattenaufnahmevorrichtung 10 gemäß dem Stand der Technik, beispielsweise wie aus [5] bis [9] bekannt, und in den Fig. 2 bis 9 ist jeweils eine Spulenmattenaufnahmevorrichtung 10 in erfindungsgemäßer Ausgestaltung dargestellt.

Die Spulenmattenaufnahmevorrichtung 10 weist eine Halterung 12, eine Dreheinheit 14 und eine Bewegungseinrichtung 16 auf.

Die Halterung 12 erstreckt sich länglich in eine von links nach rechts in den Figuren gezeigte Längsrichtung. Die Halterung 12 ist zum Bereitstellen und Halten einer linear angeordneten Spulenmatte 18 ausgebildet. Hierzu weist die Halterung 12 eine Reihe von Zähnen 20 mit Zahnlücken 22 dazwischen auf. In den Zahnlücken 22 können geradlinige Drahtabschnitte 24 der Spulenmatte 18 aufgenommen werden.

Bei den dargestellten Ausführungen ist die Halterung 12 als geradliniger Rechen mit einer Kammstruktur ausgebildet ist, die eine oder mehrere nebeneinander angeordnete Reihen der Zähne 20 aufweist.

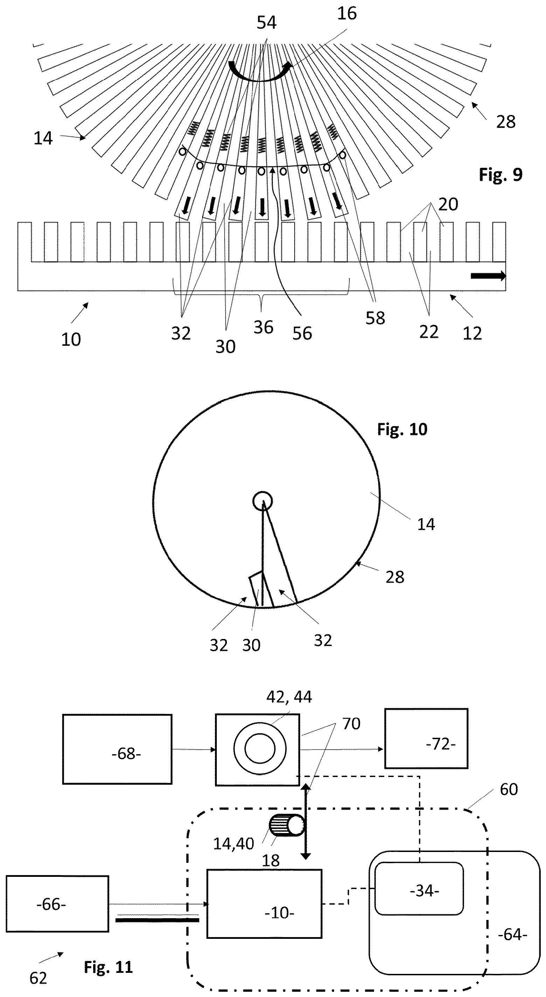

Die Dreheinheit 14 ist um eine Drehachse 26 drehbar und um den Umfang herum mit einer ringförmigen Anordnung 28 von nach außen öffnender Nuten 30 versehen. Die Nuten 30 sind bei den gezeigten Ausgestaltungen über den Umfang verteilt. Die Nuten 30 können sich, wie dies in den Fig. 1 bis 9 dargestellt ist, in radialer Richtung erstrecken oder sich auch nur mit einer Richtungskomponente in radialer Richtung erstrecken - oder mit anderen Worten sich schräg zur Radialrichtung erstrecken -, wie dies in Fig. 10 angedeutet ist. In Fig. 10 ist eine Ausgestaltung der Dreheinheit 14 gezeigt, bei der die verlängerte Mittelachse der Nuten 30 nicht durch die Drehachse 26 geht.

Bei den Dreheinheiten 14 der Fig. 1 bis 10 sind die Nuten 30 derart ausgebildet, dass darin die geradlinigen Drahtabschnitte 24 einfügbar sind. Die Nuten 30 sind durch sich mit zumindest einer Richtungskomponente radial erstreckende Nutbegrenzungselemente 32 begrenzt.

Die in den Fig. 1 und 2 nur durch Pfeile angedeutete Bewegungseinrichtung 16 ist zum relativen Bewegen der Dreheinheit 14 und der Halterung 12 in Längsrichtung der Halterung 12 und zum Rollen der Dreheinheit 14 über die Halterung 12 ausgebildet. Die Bewegungseinrichtung 16 weist entsprechende Lagerungen, Führungen und Aktoren, wie sie an sich grundsätzlich dem Fachmann bekannt sind, siehe z.B. die Literaturstellen [5] bis [9], auf. Die Komponenten der Bewegungseinrichtung 16 sind zum Durchführen der folgenden Bewegungen eingerichtet.

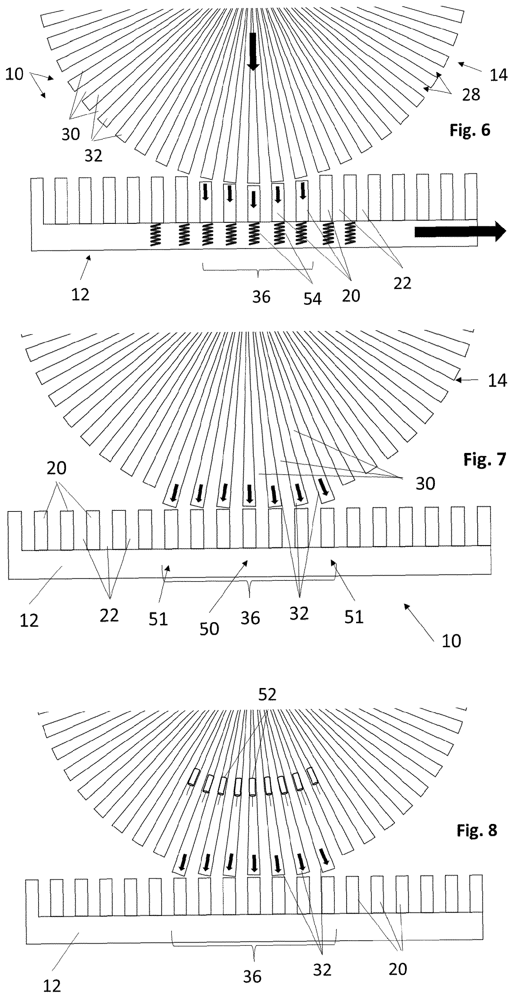

Bei einigen Ausführungsformen der Bewegungseinrichtung 16 wird die Halterung 12 stationär gehalten und die Dreheinheit 14 wird unter Drehen linear entlang der Halterung 12 bewegt. Bei bevorzugten Ausgestaltungen der Bewegungseinrichtung 16 dreht sich die Dreheinheit 14 um die beim Aufnehmen der Spulenmatte 18 in Längsrichtung stationär gehaltene Drehachse 26, während die Halterung 12 in Längsrichtung linear bewegt wird. Bei den dargestellten Ausgestaltungen ist die Halterung 12 insgesamt durch die Bewegungseinrichtung 16 in Längsrichtung verschiebbar. In der später noch erläuterten Höhenrichtung ist die Drehachse 26 bei einigen Ausführungsformen, wie sie in Fig. 6 angedeutet sind, auf die Halterung 12 zu und weg bewegbar, um eine definierte Druckkraft auszuüben, wie dies später noch erläutert wird.

Bei den Ausführungen nach den Fig. 1 bis 11 ist die Bewegungseinrichtung 16 derart eingerichtet und über eine in Fig. 11 dargestellte elektronische, insbesondere durch Hardware und/oder Software implementierte Steuerung 34 gesteuert, dass die Relativbewegung in Längsrichtung synchron mit der Drehbewegung beim Rollen erfolgt und mit anderen Worten mit der gleichen Geschwindigkeit wie die Umfangsgeschwindigkeit der Dreheinheit 14 erfolgt. Dabei ist die Bewegungseinrichtung 16 dazu eingerichtet, beim Rollen der Dreheinheit 14 über die Halterung 12 in einem Übergabebereich 36 mehrere Nuten 30 mit mehreren Zahnlücken 22 zum Übergeben der Drahtabschnitte 24 und Führen der Drahtabschnitte 24 beim Übergeben auszurichten.

Die Dreheinheit 14 ist vorzugsweise als Fügewerkzeug 40 zum Einfügen der Spulenmatte 18 in ein in Fig. 11 angedeutetes Bauteil 42, wie insbesondere ein Blechpaket eines Stators 44 oder in ein Zwischenhandlingswerkzeug, ausgebildet. Das Bauteil 42 ist mit nach innen öffnenden Bauteilnuten (in Fig. 11 nicht dargestellt, aber grundsätzlich bekannt, siehe [1] bis [9]) versehen, in die die geradlinigen Drahtabschnitte 24 von dem Fügewerkzeug 40 übergeben werden, wie dies z.B. in [5] beschrieben und gezeigt ist. Bei einigen nicht dargestellten Ausführungsformen kann das Drehteil 14 aber auch direkt das Bauteil, insbesondere z.B. ein Rotor mit nach außen öffnenden Nuten oder ein Statorbauteil eines Außenläufermotors, sein.

Im Stand der Technik, wie er in dem Vergleichsbeispiel nach Fig. 1 dargestellt ist, sind die Zähne 20 starr an einer Basis 38 der Halterung 12 angeordnet. Weiter ist es bei einer als Fügewerkzeug 40 ausgebildeten Dreheinheit 14 zwar grundsätzlich bekannt, die Nutbegrenzungselemente 32 der Dreheinheit 14 radial beweglich auszugestalten, um den Gesamtdurchmesser der Dreheinheit 14 zum Aufnehmen auf einen großen Durchmesser und zum Einfügen und Komprimieren auf einen kleinen Durchmesser einzustellen. Dabei werden aber alle Nutbegrenzungselemente 32 gemeinsam bewegt, so dass die Nutöffnungen der Anordnung 28 von Nuten 30 beim Aufnehmen auf dem gleichen Radius liegen.

Insgesamt ergibt sich beim Stand der Technik nach Fig. 1 aufgrund der Geometrieveränderung von linear zu rund nur ein sehr kleiner Übergabebereich 36. In Fig. 1 sind beispielsweise nur zwei Nuten mit zwei Zahnlücken im Übergabebereich 36 so nahe zueinander gebracht, dass eine Übergabe der Drahtabschnitte 24 unter ständiger Führung durch die Zähne und die Nutbegrenzungselemente 32 erfolgen kann. Außerhalb dieses kleinen sich nur über zwei Nuten erstreckenden Übergabebereichs 36 ist keine Führung mehr möglich, wie dies durch den Pfeil 46 angedeutet ist. Die Drahtabschnitte 24 müssen in diesem kleinen Übergabebereich 36 mit großem Hub 48 übergeben werden. Die Steigung der Bewegungskurve der Drahtabschnitte 24 ist sehr groß, so dass eine relativ große Belastung auf die Drahtabschnitte 24 wirkt.

Im Gegensatz hierzu wird hiermit ein neues Spulenmattenaufnahmeverfahren vorgeschlagen, welches im Folgenden anhand der Fig. 2 und 7 erläutert wird.

Das Spulenmattenaufnahmeverfahren wird im Zuge der Herstellung eines Bauteils einer elektrischen Maschine durchgeführt, um die Spulenmatte 18 von der sich länglich erstreckenden Halterung 12 aufzunehmen und in die ringförmige Anordnung 28 von Nuten 30, die sich bezüglich einer Radialrichtung gesehen nach außen öffnen, einzufügen. Insbesondere wird durch das Spulenmattenaufnahmeverfahren eine Linearspule durch Aufrollen in einen aufgewickelten Zustand gebracht.

Das Spulenmattenaufnahmeverfahren umfasst die Schritte
a) Bereitstellen der Spulenmatte 18 auf der sich länglich erstreckenden Halterung, die eine Reihe von Zähnen 20 mit Zahnlücken 22 dazwischen aufweist, so dass geradlinige Drahtabschnitte 24 der Spulenmatte 18 in den Zahnlücken 22 aufgenommen sind,
b) Bereitstellen der um die Drehachse 26 drehbaren Dreheinheit 14 mit der ringförmigen Anordnung 28 von Nuten 30, die durch Nutbegrenzungselemente 32 begrenzt sind, welche sich mit zumindest einer Richtungskomponente radial erstrecken,
c) relatives Bewegen von Dreheinheit 14 und Halterung 12 in Längsrichtung der Halterung 12 und Rollen der Dreheinheit 14 über die Halterung 12 derart, dass in einem bogenförmigen Übergabebereich 36 mehrere Nuten 30 mit mehreren Zahnlücken 22 ausgerichtet werden, um die Drahtabschnitte 24 der Spulenmatte 18 von den Zahnlücken 22 in die Nuten 30 zu übergeben und bei der Übergabe zu führen,
d) Überführen der geradlinigen Drahtabschnitte 24 von den Zahnlücken 22 im Übergabebereich 36 zu den damit ausgerichteten Nuten 30, und
e) Einstellen
   e1) der Höhen der Zähne 20 und/oder
   e2) der radialen Längen der Nutbegrenzungselemente 32

im Übergabebereich 36 derart, dass die Höhen der Zähne 20 im Fall e1) oder die Längen der Nutbegrenzungselemente 32 im Fall e2) im Zentrum 50 des Übergangsbereichs 36 jeweils kleiner als an den Randbereichen 51 des Übergangsbereichs 36 sind.

Die unterschiedliche Einstellung der Höhe der Zähne 20 ist in Fig. 2 dargestellt, während die unterschiedliche Einstellung der radialen Länge der Nutbegrenzungselemente in Fig. 7 dargestellt ist. Selbstverständlich können auch beide Maßnahmen kombiniert werden.

Als Höhe eines Zahns 20 ist dabei die Position der Spitze des Zahns 20 in der sich quer zur Längsrichtung und quer zur Drehachse 26 erstreckenden Dimension definiert. Diese Definition wird im Folgenden als Höhenrichtung bezeichnet. Vorzugsweise ist die Halterung 12 mit ihrer Längsrichtung in horizontaler Richtung orientiert, so dass die Höhenrichtung bei bevorzugter Ausgestaltung mit der vertikalen Richtung (d.h. der Richtung der Wirkung der Schwerkraft) zusammenfällt; dies muss aber nicht so sein, eine Übergabe funktioniert auch in beliebiger anderer Ausrichtung von Halterung 12 und Dreheinheit 14.

Wie man Fig. 2 und 7 im Vergleich zu Fig. 1 entnehmen kann, wird durch die unterschiedliche Einstellung der Höhen der Zähne 20 und/oder der radialen Länge der Nutbegrenzungselemente 32 in dem Bogenbereich, wo sich Dreheinheit 14 und Halterung 12 einander am meisten annähern, eine wesentliche Vergrößerung des Übergabebereichs 36 erreicht. Eine Übergabe mit Führung ist bei den in den Fig. 2 bis 9 gezeigten Ausführungsbeispielen der Erfindung durch die unterschiedliche Einstellung an sechs Nuten 30 und nicht nur an zwei Nuten 30 wie im Stand der Technik möglich. Selbstverständlich ist dies nur ein Beispiel, es können auch mehr oder weniger Nuten 30 (z.B. drei bis zehn) im Übergabebereich 36 mit entsprechenden Zahnlücken 22 zur geführten Übergabe ausgerichtet sein.

Wie man Fig. 2 entnehmen kann, lässt sich so der Hub 48, den jeder zu übergebende Drahtabschnitt 24 in Höhen- bzw. Radialrichtung durchlaufen muss, um unter ständiger Führung übergeben zu werden, über einen größeren Bereich in Längsrichtung verteilen. Mit anderen Worten ist die Bewegungskurve der Drahtabschnitte 24 weniger steil. Die Drahtabschnitte 24 sind somit einer geringeren Belastung ausgesetzt. Dies schont insbesondere auch die Isolationsschicht, da die Führung mit geringeren Führungskräften - geringerer Reibung der Drahtabschnitte an den Zähnen 20 und den Nutbegrenzungselementen 32 - erfolgen kann.

Die Spulenmattenaufnahmevorrichtung 10 gemäß den in den Fig. 2 bis 10 gezeigten Ausführungsformen ist entsprechend zum Durchführen eines derartigen Spulenmattenaufnahmeverfahrens geeignet und/oder eingerichtet. Insbesondere sind
aa) die Höhe der jeweiligen Zähne 20 der Halterung 12 in dem Übergabebereich 36 und/oder
bb) die radiale Erstreckung der jeweiligen Nutbegrenzungselemente 36 in dem Übergabebereich während dem Rollen jeweils einzeln einstellbar und anpassbar.

Das unterschiedliche Einstellen der Höhe der Zähne 20 und/oder der radialen Erstreckung der Nutbegrenzungselemente 32 kann auf verschiedene Arten erfolgen.

Für die Durchführung der Alternative e1) sind z.B. die Zähne 20 in Höhenrichtung beweglich ausgebildet. Beispielsweise ist die Basis 38 der Halterung 12 starr, z.B. als Grundplatte oder Grundrahmen, ausgeführt, und die Zähne 20 sind darin in Höhenrichtung beweglich gelagert. Die Halterung 12 kann bei nicht näher dargestellten Ausführungsformen aber auch insgesamt aus in Längsrichtung nebeneinander angeordneten Segmenten zusammengesetzt sein, die jeweils einen Zahnkörper und ein Grundelement aufweisen, wobei die Segmente relativ zueinander in Höhenrichtung beweglich sind.

Bei den in den Fig. 2 bis 6 dargestellten Ausführungsformen ist die Halterung 12 mit individuell in Richtung quer zur Längserstreckung bewegbaren Zähnen 20 ausgebildet. Insbesondere sind die Zähne 20 in Höhenrichtung verschiebbar an der starren Basis 38 der Halterung 12 gehalten.

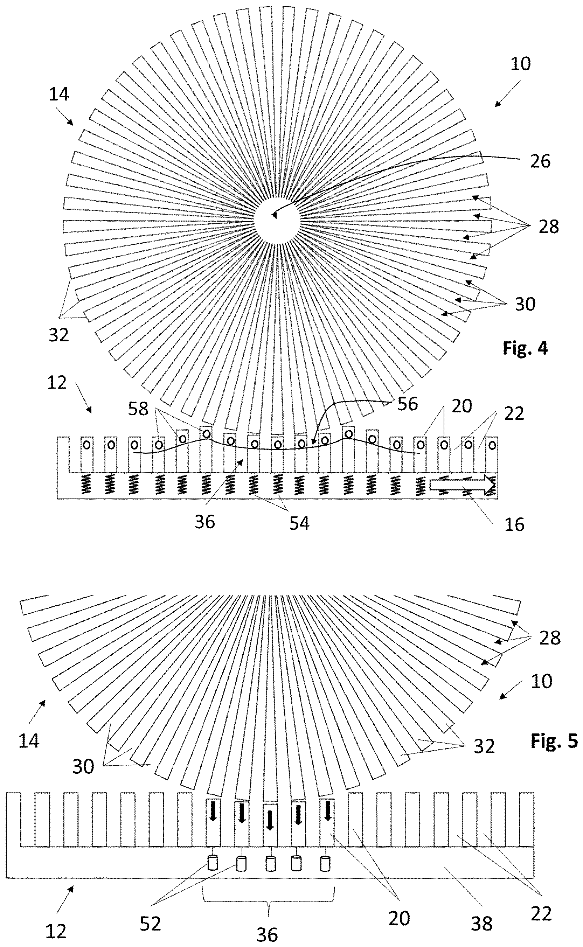

Bei der in Fig. 5 dargestellten Ausführungsform weist die Halterung 12 Aktoren 52 zum einzelnen Bewegen der Zähne 20 zum Einstellen deren Höhe auf.

Bei den in den Fig. 4 und 6 dargestellten Ausführungsformen weist die Halterung 12 elastisch bewegbar gelagerte Zähne 20 auf, die durch Kontakt mit der Dreheinheit und/oder einer Steuerkurve einzeln in der Höhe einstellbar sind.

Für die Durchführung der Alternative e2) sind insbesondere die als Lamellen ausgebildeten Nutbegrenzungselemente 32 einzeln in Radialrichtung beweglich und können unterschiedlich zu ihren benachbarten Nutbegrenzungselement 32 bewegt werden.

Wie man insbesondere den Fig. 2 und 7 entnehmen kann, erfolgt das Einstellen der Höhen und/oder der Längen derart, dass sie sich vom Zentrum 50 des Übergabebereichs 36 jeweils nach außen gesehen (d.h. vom Zentrum 50 aus nach links und rechts in den Figuren) allmählich vergrößern.

Die Höhen und/oder Längen werden bei einigen Ausführungsformen derart eingestellt, dass die Bogenlänge des Übergabebereichs 36 gegenüber einem Zustand mit gleichen Höhen oder Längen vergrößert ist. Mit anderen Worten ist gegenüber einem Zustand mit gleichen Höhen oder Längen der jeweilige Abstand zwischen der jeweiligen Zahnlücke 22 und der jeweiligen damit ausgerichteten Nut 30 weiter außen im Übergabebereich 36 verringert oder eliminiert ist.

Das Einstellen kann z.B. wie in Fig. 2 bis 4 und 7 bis 9 dargestellt durch aktives Einfahren oder Ausfahren von Zähnen 20 und/oder Nutbegrenzungselementen 32 erfolgen.

Das Einstellen kann aber auch durch passives Einfahren oder Ausfahren elastisch gehaltener Zähne 20 und/oder Nutbegrenzungselemente 32 beim relativen Bewegen von Halterung 12 und darin eintauchender Dreheinheit 14 und/oder von Dreheinheit 14 und darin eintauchender Halterung 12 erfolgen, wie dies in Fig. 6 für die Alternative e1) dargestellt ist, wobei klar ist, dass dieses Prinzip auch auf die Einstellung der Nutbegrenzungselemente 32 gemäß Alternative e2) übertragbar ist.

Bei den gezeigten Ausführungsformen lässt sich das Einstellen der Höhe der einzelnen Zähne 20 zur Vergrößerung des Übergabebereichs 36 (Alternative e1) mittels einer oder mehrerer der folgenden Maßnahmen erreichen:
e1a) Ausfahren von Zähnen 20 außerhalb des Zentrums 50 des Übergabebereichs 36 - siehe Fig. 2 bis 4;
e1b) Einfahren von Zähnen 20 im Zentrum 50 des Übergabebereichs 36 - siehe Fig. 5 und 6,
e1c) Einstellen der Höhen der Zähne 20 im Übergabebereich 36 so, dass Zähne umso weiter ausgefahren sind, je weiter sie vom Zentrum 50 entfernt sind - siehe Fig. 2 bis 4, und/oder
e1d) Einstellen der Höhen der Zähne 20 im Übergabebereich 36 so, dass Zähne umso weiter eingefahren sind, je näher sie am Zentrum liegen - siehe Fig. 5 und 6.

In entsprechender Weise, wie dies für das Ausfahren und Einfahren der Zähne 20 für die Alternative e1) in den Fig. 2 bis 6 dargestellt ist, kann das Einstellen der radialen Längen der Nutbegrenzungselemente 32 analog mittels einer oder mehrerer der folgenden Maßnahmen erfolgen:
e2a) Ausfahren von Nutbegrenzungselementen 32 außerhalb des Zentrums 50 des Übergabebereichs 36 - dargestellt in Fig. 7 bis 9,
e2b) Einfahren von Nutbegrenzungselementen 32 im Zentrum 50 des Übergabebereichs 36 analog zu den Fig. 5 und 6,
e2c) Einstellen der radialen Erstreckung der Nutbegrenzungselemente 32 im Übergabebereich 36 so, dass Nutbegrenzungselemente 32 umso weiter ausgefahren sind, je weiter sie vom Zentrum 50 entfernt sind, siehe Fig. 7 bis 9;
e2d) Einstellen der radialen Erstreckung der Nutbegrenzungselemente 32 im Übergabebereich 36 so, dass Nutbegrenzungselemente 32 umso weiter eingefahren sind, je näher sie am Zentrum liegen - analog zu Fig. 5 und 6.

In den Fig. 2 bis 9 sind unterschiedliche erfindungsgemäße Ausgestaltungen der Spulenmattenaufnahmevorrichtung 10 dargestellt, die zum Durchführen der obigen unterschiedlichen Varianten des Spulenaufnahmeverfahrens eingerichtet sind. Die Merkmale, die nur bei einer oder einigen der unterschiedlichen Ausführungsformen gezeigt sind, können auch bei den anderen der Ausführungsformen eingesetzt sein. Die Merkmale der unterschiedlichen Ausführungsformen sind beliebig kombinierbar.

Die Fig. 2 bis 4 zeigen Ausgestaltungen der Spulenmattenaufnahmevorrichtung 10, die dazu eingerichtet sind, Zähne 20 zur Anpassung an den Umfang der Dreheinheit 14 anzuheben, um so den Übergabebereich 36 zu vergrößern.

Die Fig. 5 und 6 zeigen Ausgestaltungen der Spulenmattenaufnahmevorrichtung 10, die dazu eingerichtet sind, Zähne 20 zur Anpassung an den Umfang der Dreheinheit 14 abzusenken.

Die Fig. 7 bis 9 zeigen Ausgestaltungen der Spulenaufnahmevorrichtung 10, die dazu eingerichtet sind, Nutbegrenzungselemente 32 radial auszufahren. Bei nicht dargestellten weiteren Ausgestaltungen werden Nutbegrenzungselemente 32 im Zentrum des Übergabebereichs 36 zur Verlängerung desselben radial eingefahren.

Bei einigen Ausführungsformen erfolgt die Einstellung der Höhe der Zähne 20 und/oder der radialen Erstreckung der Nutbegrenzungselemente 32 durch aktive Ansteuerung durch Aktoren 52, wie dies in Fig. 5 am Beispiel der Ansteuerung des Einziehens der Zähne 20 und in Fig. 8 für das Ausfahren der Nutbegrenzungselemente 32 gezeigt ist. Die Aktoren 52 sind hierzu an die Steuerung 34 angeschlossen und werden insbesondere einzeln aktiv angesteuert. Bei nicht dargestellten Ausführungsformen erfolgt mittels solcher Aktoren 52 das Anheben der Zähne 20 wie in Fig. 2 oder das Zurückziehen der im Zentrum 50 angeordneten Nutbegrenzungselemente 32.

Bei der Ausgestaltung von Fig. 6 erfolgt das Einfahren von Zähnen 20 nicht aktiv, sondern passiv, hier durch Herunterdrücken durch die Nutbegrenzungselemente 32 (z.B. Lamellen) der Dreheinheit 14. Hierzu sind die Zähne 20 in Höhenrichtung elastisch gelagert, wie dies durch Federelemente 54 angedeutet ist. Die Dreheinheit 14 wird durch Kraft auf die Drehachse 26 nach unten definiert gegen die elastisch gelagerten Zähne 20 der Halterung gedrückt.

Bei den in den Fig. 3, 4 und 9 dargestellten Ausführungsformen erfolgt das Einstellen der Höhen der Zähne 20 oder der radialen Erstreckung der Nutbegrenzungselemente 32 mittels wenigstens einer mechanischen Steuerkurve 56. Die Zähne 20 bzw. die Nutbegrenzungselemente 32 werden bei der durch die Bewegungseinrichtung 16 eingeleiteten Bewegung relativ zu der wenigstens einen Steuerkurve 56 bewegt. Die Zähne 20 bzw. die Nutbegrenzungselemente 32 weisen Kontaktelemente 58 - insbesondere Mitnehmer mit Gleitflächen oder Rollen - auf, die an der Steuerkurve 56 angreifen. Aufgrund des Verlaufs der Steuerkurve 56 werden die Zähne 20 bzw. die Nutbegrenzungselemente 32 dann entsprechend zu ihrer aktuellen Position im Übergabebereich 36 ausgelenkt.

Dabei können die Zähne 20 bzw. die Nutbegrenzungselement 32 elastisch gegen die Steuerkurve 56 vorgespannt sein, wie dies in den Fig. 4 und 9 durch die Andeutung mit Federelementen 54 dargestellt ist. Es können auch jeweils Paare von Kontaktelementen 58 und ein Paar Steuerkurven 56 zum Vor- und Zurückstellen der Zähne 20 bzw. der Nutbegrenzungselemente 32 vorgesehen sein, wie dies in Fig. 3 dargestellt ist.

Gemäß einer bevorzugten Ausgestaltung nach Fig. 11 wird die Spulenmattenaufnahmevorrichtung 10 in einer Spulenmattenüberführungsstation 60 für eine Herstellanlage 62 zum Herstellen eines Bauteils 42 einer elektrischen Maschine verwendet. Die Spulenmattenüberführungsstation 60 ist zum Überführen der linearen Spulenmatte 18 in einen aufgewickelten Zustand ausgebildet und weist neben der Spulenmattenaufnahmevorrichtung 10 noch die Steuerung 34 auf, die dazu eingerichtet ist, die Spulenmattenaufnahmevorrichtung 10 zur Durchführung des Spulenmattenaufnahmeverfahrens gemäß einer der zuvor erläuterten bevorzugten Ausgestaltungen des Verfahrens anzusteuern.

Wie oben bereits erwähnt ist die Steuerung 34 als elektronische Steuerung ausgebildet und weist insbesondere eine Rechnereinheit und ein in einen Speicher geladenes Computerprogramm mit entsprechenden Steueranweisungen zum Durchführen der einzelnen Steuerschritte des Verfahrens auf. Die Steuerung 34 kann insbesondere ein als Software ausgebildeter Teil einer Gesamtsteuerung 64 der Herstellanlage 62 sein.

Fig. 11 zeigt die Herstellanlage 62 zur Herstellung eines mit einer Spulenwicklung versehenen Statorbauteils 44. Die Herstellanlage 62 umfasst eine Spulenmattenherstelleinrichtung 66, die Spulenaufnahmevorrichtung 10, bei der die Dreheinheit 14 als Fügewerkzeug 40 ausgebildet ist, eine Blechpaketbereitstelleinrichtung 68, eine Einrichtung 70 zum relativen Einfügen des Fügewerkzeugs 40 in ein durch die Blechpaketbereitstelleinrichtung 68 bereitgestelltes ringförmiges Blechpaket (Beispiel für das Bauteil 44 mit nach innen öffnenden Bauteilnuten) und zum Überführen der Spulenwicklung von dem Fügewerkzeug 40 in das Blechpaket, eine Statorweiterverarbeitungseinrichtung 72 und die Gesamtsteuerung 64 auf. Die Spulenmattenherstelleinrichtung 66 ist zum Herstellen der Spulenmatte 18 wie z.B. in einer der Literaturstellen [1] bis [4] beschrieben ausgebildet. Die Spulenmatte 18 wird dann auf der Halterung 12 an der Spulenmattenaufnahmevorrichtung 10 bereitgestellt, dort durch Durchführung des Spulenmattenaufnahmeverfahrens auf dem Fügewerkzeug 40 aufgenommen und durch die Einrichtung 70, die analog wie in Literaturstelle [5] beschrieben ausgebildet sein kann, in das Blechpaket überführt. Die Statorweiterverarbeitungsvorrichtung 70 ist zum Durchführen der an sich bekannten weiteren Schritte zur Fertigstellung des Stators, wie z.B. Imprägnieren oder Einfügen von Nutdeckleisten, Verschalten, Funktion Testen usw. ausgebildet.

Bei anderen nicht dargestellten Ausführungsformen der Herstellanlage 62 wird die Spulenmatte mittels des Fügewerkzeugs 40 erst in ein ringförmiges Zwischenhandlingswerkzeug, das ebenfalls mit radial beweglichen Lamellen versehen sein kann, zwischen denen nach innen öffnende Nuten gebildet sind, eingefügt und von dort auf ein Blechpaket eines Außenläufermotor-Stators mit nach außen öffnenden Statornuten überführt.

Es sind Verfahren und Vorrichtungen zum Aufnehmen einer Spulenmatte (18) von einer sich länglich erstreckenden Halterung (12) und Einfügen der Spulenmatte (18) in eine ringförmige Anordnung (28) von nach außen öffnenden Nuten (30) beschrieben worden. Die Anordnung (28) von Nuten (30) ist beispielsweise an einem Fügewerkzeug (40) zum Einfügen der aufgewickelten Spulenmatte (18) in nach innen geöffnete Bauteilnuten eines Stators oder dergleichen Bauteil ausgebildet. Um eine schonendere und zuverlässigere Übergabe mit geringerem Risiko von Beschädigungen oder Fehlern zu ermöglichen, wird vorgeschlagen, die Höhen von Zähnen (20) der Halterung (12) und/oder die radialen Längen von Nutbegrenzungselemente (32), die an der Dreheinheit (14) die Nuten (30) begrenzen, in einem Übergabebereich (36), in dem Drahtabschnitte (24) der Spulenmatte (18) unter ständiger beidseitiger Führung erst durch die Zähne (20) und dann durch die Nutbegrenzungselemente (32) übergeben werden, derart einzeln einzustellen, dass die Höhen der Zähne (32) bzw. die Längen der Nutbegrenzungselemente (32) im Zentrum (50) des Übergangsbereichs (36) jeweils kleiner als an den Randbereichen (52) des Übergangsbereichs (36) sind. Hierdurch wird gegenüber einem Zustand ohne individuelle Einstellung die Bogenlänge des Übergabebereichs (36) verlängert, was zu verbesserter Führung und geringerer Belastung an der Spulenmatte (18) führt.

### Bezugszeichenliste:

- 10: Spulenmattenaufnahmevorrichtung
- 12: Halterung
- 14: Dreheinheit
- 16: Bewegungseinrichtung
- 18: Spulenmatte
- 20: Zahn
- 22: Zahnlücke
- 24: Drahtabschnitt
- 26: Drehachse
- 28: Anordnung von Nuten
- 30: Nut
- 32: Nutbegrenzungselement
- 34: Steuerung
- 36: Übergabebereich
- 38: Basis
- 40: Fügewerkzeug
- 42: Bauteil
- 44: Stator
- 46: keine Führung mehr möglich
- 48: Hub
- 50: Zentrum
- 51: Randbereich
- 52: Aktor
- 54: Federelement
- 56: Steuerkurve
- 58: Kontaktelement
- 60: Spulenmattenüberführungsstation
- 62: Herstellanlage
- 64: Gesamtsteuerung
- 66: Spulenmattenherstelleinrichtung
- 68: Blechpaketbereitstelleinrichtung
- 70: Einrichtung zum Überführen der aufgewickelten Spulenwicklung
- 72: Statorweiterverarbeitungseinrichtung

## Patentansprüche

1. Im Zuge der Herstellung eines Bauteils einer elektrischen Maschine durchzuführendes Spulenmattenaufnahmeverfahren zum Aufnehmen einer Spulenmatte (18) von einer sich länglich erstreckenden Halterung (12) und Einfügen der Spulenmatte (18) in eine ringförmige Anordnung (28) von Nuten (30), die sich nach außen öffnen, mit den Schritten:
a) Bereitstellen der Spulenmatte (18) auf der sich länglich erstreckenden Halterung (12), die eine Reihe von Zähnen (20) mit Zahnlücken (22) dazwischen aufweist, so dass geradlinige Drahtabschnitte (24) der Spulenmatte (18) in den Zahnlücken (22) aufgenommen sind,
b) Bereitstellen einer um eine Drehachse (26) drehbaren Dreheinheit (14) mit der ringförmigen Anordnung (28) von Nuten (30), die durch Nutbegrenzungselemente (32) begrenzt sind, welche sich mit zumindest einer Richtungskomponente radial erstrecken,
c) relatives Bewegen von Dreheinheit (14) und Halterung (18) in Längsrichtung der Halterung (12) und Rollen der Dreheinheit (14) über die Halterung (12) derart, dass in einem bogenförmigen Übergabebereich (36) mehrere der Nuten (30) mit mehreren der Zahnlücken (22) ausgerichtet werden, um die Drahtabschnitte (24) der Spulenmatte (18) von den Zahnlücken (22) in die Nuten (30) zu übergeben und bei der Übergabe zu führen,
d) Überführen der geradlinigen Drahtabschnitte (24) von den Zahnlücken (22) im Übergabebereich (36) zu den damit ausgerichteten Nuten (30), und **dadurch gekennzeichnet dass**, das Spulenmattenaufnahmeverfahren den Schritt umfasst:
e) Einstellen
e1) der Höhen der Zähne (20) und/oder
e2) der radialen Längen der Nutbegrenzungselemente (32)
im Übergabebereich (36) derart, dass die Höhen der Zähne (32) im Fall e1) oder die Längen der Nutbegrenzungselemente (32) im Fall e2) im Zentrum (50) des Übergangsbereichs (36) jeweils kleiner als an den Randbereichen (52) des Übergangsbereichs (36) sind.

2. Spulenmattenaufnahmeverfahren nach Anspruch 1, **dadurch gekennzeichnet, dass** Schritt a) wenigstens einen oder mehrere der Schritte umfasst:
a1) Bereitstellen der Halterung (12) mit sich in einer Richtung quer zur Längserstreckung derart bewegbaren Zähnen (20), dass die Höhe der Zähne (20) veränderbar ist;
a2) Bereitstellen der Halterung (12) als geradliniger Rechen mit einer Kammstruktur, die wenigstens ein oder mehrere nebeneinander angeordnete Reihen von Zähnen (20) aufweist;
a3) Bereitstellen der Halterung (12) mit Aktoren (52) zur unterschiedlichen Bewegung der Zähne (20), um die Höhe einzeln einzustellen,
a4) Bereitstellen der Halterung (12) mit elastisch derart gelagerten Zähnen (20), dass deren Höhe einzeln durch Kontakt von außen einstellbar ist.

3. Spulenmattenaufnahmeverfahren nach einem der voranstehenden Ansprüche, **dadurch gekennzeichnet, dass** Schritt b) umfasst:
Bereitstellen der Dreheinheit (14) in Form eines Fügedorns oder Fügewerkzeugs (40), mittels welchem die aufgenommene Spulenmatte (18) in ein Bauteil (42) mit sich nach innen öffnenden Bauteilnuten überführbar ist.

4. Spulenmattenaufnahmeverfahren nach einem der voranstehenden Ansprüche, **dadurch gekennzeichnet,**
**dass** Schritt e) wenigstens einen oder mehreren der Schritte umfasst:
e3) Einstellen der Höhen und/oder der Längen derart, dass sie sich vom Zentrum (50) des Übergabebereichs (36) jeweils nach außen gesehen allmählich vergrößern,
e4) Einstellen der Höhen und/oder Längen derart, dass die Bogenlänge des Übergabebereichs (36) gegenüber einem Zustand mit gleichen Höhen oder Längen vergrößert ist oder dass ein Abstand zwischen den Zahnlücken (22) und den Nuten (30) weiter außen im Übergabebereich (36) verringert oder eliminiert ist,
e5) aktives Einfahren und/oder Ausfahren von Zähnen (20) und/oder Nutbegrenzungselementen (32);
e6) passives Einfahren und/oder Ausfahren elastisch gehaltener Zähne (20) und/oder Nutbegrenzungselemente (32) beim relativen Bewegen von Halterung (12) und darin eintauchender Dreheinheit (14) und/oder von Dreheinheit (14) und darin eintauchender Halterung (12).

5. Spulenmattenaufnahmeverfahren nach einem der voranstehenden Ansprüche, **dadurch gekennzeichnet, dass** Schritt e)
5.1 im Fall e1) wenigstens einen oder mehrere der Schritte umfasst:
e1a) Ausfahren von Zähnen (20) außerhalb des Zentrums (50) des Übergabebereichs (36),
e1b) Einfahren von Zähnen (20) im Zentrum des Übergabebereichs (36),
e1c) Einstellen der Höhen der Zähne (20) im Übergabebereich (36) so, dass Zähne (20) umso weiter ausgefahren sind, je weiter sie vom Zentrum (50) entfernt sind,
e1d) Einstellen der Höhen der Zähne (20) im Übergabebereich so, dass Zähne (20) umso weiter eingefahren sind, je näher sie am Zentrum liegen; und
5.2 im Fall e2) wenigstens einen oder mehrere der Schritte umfasst:
e2a) Ausfahren von Nutbegrenzungselementen (32) außerhalb des Zentrums (50) des Übergabebereichs (36),
e2b) Einfahren von Nutbegrenzungselementen (32) im Zentrum (50) des Übergabebereichs (36),
e2c) Einstellen der radialen Längen der Nutbegrenzungselemente (32) im Übergabebereich (36) so, dass Nutbegrenzungselemente (32) umso weiter ausgefahren sind, je weiter sie vom Zentrum (50) entfernt sind,
e2d) Einstellen der radialen Längen der Nutbegrenzungselemente (32) im Übergabebereich (36) so, dass Nutbegrenzungselemente (32) umso weiter eingefahren sind, je näher sie am Zentrum (50) liegen.

6. Herstellverfahren zum Herstellen eines Statorbauteils mit Spulenwicklung, umfassend:
Durchführen des Spulenmattenaufnahmeverfahrens nach einem der voranstehenden Ansprüche zum Einfügen der Spulenmatte (18) auf ein Fügewerkzeug (40), relatives Einfahren des mit der Spulenmatte (18) versehenen Fügewerkzeugs (40) in ein ringförmiges Bauteil (42) mit einer Anordnung nach innen öffnender Bauteilnuten und Überführen der Spulenmatte (18) von dem Fügewerkzeug (40) in das Bauteil (42).

7. Spulenmattenaufnahmevorrichtung (10) zum Aufnehmen einer Spulenmatte (18) im Zuge der Herstellung eines Bauteils einer elektrischen Maschine, umfassend:
eine sich länglich erstreckende Halterung (12) zum Bereitstellen und Halten einer linear angeordneten Spulenmatte (18), welche Halterung (12) eine Reihe von Zähnen (20) mit Zahnlücken (22) dazwischen aufweist, in denen geradlinige Drahtabschnitte (24) der Spulenmatte (18) aufnehmbar sind,
eine um eine Drehachse (26) drehbare Dreheinheit (14) mit einer ringförmigen Anordnung (28) von Nuten (30), die sich nach außen öffnen und in die die geradlinigen Drahtabschnitte (24) einfügbar sind und die durch sich mit wenigstens einer Richtungskomponente in Radialrichtung erstreckende Nutbegrenzungselemente (32) begrenzt sind,
eine Bewegungseinrichtung (16) zum relativen Bewegen der Dreheinheit (14) und der Halterung (12) in Längsrichtung der Halterung (12) und zum Rollen der Dreheinheit (14) über die Halterung (12), wobei die Bewegungseinrichtung (16) dazu eingerichtet ist, beim Rollen der Dreheinheit (14) über die Halterung (12) in einem Übergabebereich (36) mehrere der Nuten (30) mit mehreren der Zahnlücken (22) zum Übergeben der Drahtabschnitte (24) und Führen der Drahtabschnitte (24) beim Übergeben auszurichten,
**dadurch gekennzeichnet dass**,
aa) die Höhe der jeweiligen Zähne (20) der Halterung (12) in dem Übergabebereich (36) und/oder
bb) die radiale Länge der jeweiligen Nutbegrenzungselemente (32) in dem Übergabebereich (36)
während dem Rollen jeweils einzeln einstellbar und anpassbar sind.

8. Spulenmattenaufnahmevorrichtung (10) nach Anspruch 7, **dadurch gekennzeichnet, dass** die Halterung (12)
8.1 als geradliniger Rechen mit einer Kammstruktur ausgebildet ist, die eine oder mehrere nebeneinander angeordnete Reihen der Zähne aufweist,
8.2 mit individuell in Richtung quer zur Längserstreckung bewegbaren Zähnen (20) ausgebildet ist,
8.3 durch die Bewegungseinrichtung (16) in Längsrichtung verschiebbar ist,
8.4 Aktoren (52) zum einzelnen Bewegen der Zähne (20) zum Einstellen deren Höhe aufweist, und/oder
8.5 elastisch bewegbar gelagerte Zähne (20) aufweist, die durch Kontakt mit der Dreheinheit (14) und/oder einer Steuerkurve (56) einzeln in der Höhe einstellbar sind.

9. Spulenmattenaufnahmevorrichtung (10) nach einem der Ansprüche 7 oder 8, **dadurch gekennzeichnet, dass** die Dreheinheit (14):
9.1 als Fügedorn oder Fügewerkzeug (40) zum Einfügen der aufgenommenen Spulenmatte (18) in nach innen öffnende Bauteilnuten eines Bauteils (42) ausgebildet ist,
9.2 Aktoren (52) zum einzelnen Bewegen der Nutbegrenzungselemente (32) aufweist und/oder
9.3 elastisch in radialer Richtung bewegbare Nutbegrenzungselemente (32) aufweist, die durch Kontakt mit Zähnen (20) der Halterung (12) und/oder mit einer Steuerkurve (56) einzeln in der radialen Länge einstellbar sind.

10. Spulenmattenüberführungsstation (60) für eine Herstellanlage (62) zum Herstellen eines Bauteils einer elektrischen Maschine, zum Überführen einer linearen Spulenmatte (18) in einen aufgewickelten Zustand, umfassend eine Spulenmattenaufnahmevorrichtung (10) nach einem der Ansprüche 7 bis 9 und eine Steuerung (34), die dazu eingerichtet ist, die Spulenmattenaufnahmevorrichtung (10) zur Durchführung des Spulenmattenaufnahmeverfahrens nach einem der Ansprüche 1 bis 5 anzusteuern.

11. Steuerung (34) für eine Spulenmattenaufnahmevorrichtung (10) nach einem der Ansprüche 7 bis 9, wobei die Steuerung (34) dazu eingerichtet ist, die Spulenmattenaufnahmevorrichtung (10) zur Durchführung des Spulenmattenaufnahmeverfahrens nach einem der Ansprüche 1 bis 5 anzusteuern.

12. Computerprogramm, umfassend maschinenlesbare Steueranweisungen, die eine Spulenmattenaufnahmevorrichtung (10) nach einem der Ansprüche 7 bis 9 dazu veranlassen, das Spulenmattenaufnahmeverfahren nach einem der Ansprüche 1 bis 5 durchzuführen.

13. Herstellanlage (62) zur Herstellung eines mit einer Spulenwicklung versehenen Statorbauteils, umfassend
eine Spulenmattenüberführungsstation (60) nach Anspruch 10, wobei die Dreheinheit (14) als Fügewerkzeug (40) ausgebildet ist, und eine Einrichtung (70) zum relativen Einfügen des Fügewerkzeugs (40) in ein ringförmiges Blechpaket und zum Überführen der aufgewickelten Spulenmatte (18) von dem Fügewerkzeug (40) in das Blechpaket.

## Claims

1. Coil mat receiving method to be performed during the manufacture of a component of an electric machine for receiving a coil mat (18) from an elongated holder (12) and inserting the coil mat (18) into an annular arrangement (28) of grooves (30) which open outwards, the method comprising the steps of:
a) providing the coil mat (18) on the elongated holder (12) that has a series of teeth (20) with tooth gaps (22) between them, so that that straight wire sections (24) of the coil mat (18) are received in the tooth gaps (22),
b) providing a rotary unit (14) which is rotatable about a rotary axis (26) and which has the annular arrangement (28) of grooves (30) that are limited by groove limiting elements (32) which extend radially with at least one directional component,
c) relatively moving the rotary unit (14) and the holder (18) in the longitudinal direction of the holder (12) and rolling the rotary unit (14) over the holder (12) in such a way that several grooves (30) with several tooth gaps (22) are aligned in an arc-shaped transfer area (36) in order to transfer the wire sections (24) of the coil mat (18) from the tooth gaps (22) to the grooves and to guide them during the transfer,
d) transferring the straight wire sections (24) from the tooth gaps (22) in the transfer area (36) to the grooves (30) aligned with them,
**characterized in that** the coil mat receiving method comprises the step of:
e) adjusting
e1) the height of the teeth (20) and/or
e2) the radial length of the groove limiting elements (32)
in the transfer area (36) in such a way that the heights of the teeth (32) in the case of e1) or the lengths of the groove limiting elements (32) in the case of e2) are smaller in the center (50) of the transfer area (36) than at the edge regions (52) of the transfer area (36).

2. Coil mat receiving method according to claim 1, **characterized in that** step a) comprises at least one or more steps:
a1) providing the holder (12) with teeth (20) movable in a direction transverse to the longitudinal direction in such a way that the height of teeth (20) is variable;
a2) providing the holder (12) as a linear rake with a comb structure that comprises at least one or more rows of teeth (20) arranged side by side;
a3) providing the holder (12) with actuators (52) for differently moving the teeth (20) for individual height adjustment,
a4) providing the holder (12) with teeth (20) elastically supported in such a way that the height thereof is individually adjustable by contact from the outside.

3. Coil mat receiving method according to any one of the preceding claims, **characterized in that** step b) comprises:
providing the rotary unit (14) in the form of joining mandrel or joining tool (40), by means of which the coil mat (18) received can be transferred to a component (42) having inwardly opening component grooves.

4. Coil mat receiving method according to any one of the preceding claims, **characterized in that**
step e) comprises at least one or more of the steps:
e3) adjusting the heights and/or lengths in such a way that they gradually increase in size from the center (50) of the transfer area (36) when seen towards the outside,
e4) adjusting the heights and/or the lengths in such a way that the arc length of the transfer area (36) is increased in size compared to a state with equal heights or lengths or that a distance between the tooth gaps (22) and the grooves (30) is reduced in size or eliminated further out in the transfer area (36),
e5) active retracting and/or extending of teeth (20) and/or groove limiting elements (32);
e6) active retracting and/or extending of elastically supported teeth (20) and/or groove limiting elements (32) during relative movement of the holder (12) and the rotary unit (14) diving into the holder and/or of the rotary unit (14) and the holder (12) diving into the rotary unit.

5. Coil mat receiving method according to any one of the preceding claims, **characterized in that** step e)
5.1 comprises at least one more steps in the case e1):
e1a) extending teeth (20) outside the center (50) of the transfer area (36),
e1b) retracting teeth (20) in the center of the transfer area (36),
e1c) adjusting the heights of the teeth (20) in the transfer area (36), so that teeth (20) are extended further the further they are from the center (50),
e1d) adjusting the heights of the teeth (20) in the transfer area (36), so that teeth (20) are retracted further the closer they are to the center (50); and
5.2 comprises at least or more steps in the case e2):
e2a) extending groove limiting elements (32) outside the center (50) of the transfer area (36),
e2b) retracting groove limiting elements (32) in the center of the transfer area (36),
e2c) adjusting the radial lengths of the groove limiting elements (32) in the transfer area (36), so that groove limiting elements (32) are extended further the further they are from the center (50),
e2d) adjusting radial lengths of the groove limiting elements (32) in the transfer area (36), so that groove limiting elements (32) are retracted further the closer they are to the center (50).

6. Method for producing a stator component having a coil winding, the method comprising:
carrying out the coil mat receiving method according to any one of the preceding claims for inserting the coil mat (18) onto a joining tool (40), relatively moving the joining tool (40) provided with the coil mat (18) into an annular component (42) having an arrangement of inwardly opening component grooves and transferring the coil mat (18) from the joining tool (40) into the component (42).

7. Coil mat receiving device (10) for receiving a coil mat (18) during the manufacture of a component of an electric machine, the device comprising:
an elongated holder (12) for providing and holding a linearly arranged coil mat (18), which holder (12) comprises a row of teeth (20) with tooth gaps (22) between them, in which tooth gaps straight wire sections (24) of the coil mat (18) can be received, a rotary unit (14) which is rotatable about a rotary axis (26) and which has an annular arrangement (28) of grooves (30) which open outwards and into which the straight wire sections (24) can be inserted and which are limited by groove limiting elements (32) which extend in the radial direction with at least one directional component, a movement device (16) for relatively moving the rotary unit (14) and the holder (12) in the longitudinal direction of the holder (12) and for rolling the rotary unit (14) over the holder (12), wherein the movement device (16) is configured, during rolling the rotary unit (14) over the holder (12) in a transfer area (36), to align several grooves (30) with several tooth gaps (22) for the transfer of the wire sections (24) and for guiding the wire sections (24) during the transfer,
**characterized in that**
aa) the height of the respective teeth (20) of the holder (12) in the transfer area (36) and/or
bb) the radial length of the respective groove limiting elements (32) in the transfer area (36)
are in each case adjustable and adaptable individually during rolling.

8. Coil mat receiving device (10) according to claim 7, **characterized in that** the holder (12)
8.1 is designed as a linear rake with a comb structure that comprises at least one or more rows of teeth (20) arranged side by side;
8.2 is designed with teeth (20) individually movable in a direction transverse to the longitudinal extension,
8.3 is displaceable in the longitudinal direction by means of the movement device (16),
8.4 comprises actuators (52) for individually moving the teeth (20) for adjusting their height, and/or
8.5 comprises elastically supported teeth (20) which are individually adjustable in height by contact with the rotary unit (14) and/or a control cam (56).

9. Coil mat receiving device (10) according to any one of claims 7 or 8, **characterized in that** the rotary unit (14):
9.1 is designed as a joining mandrel or joining tool (40) for inserting the received coil mat (18) into inwardly opening component grooves of a component (42),
9.2 comprises actuators (52) for individually moving the groove limiting elements (32) and/or
9.3 comprises groove limiting elements (32) elastically movable in the radial direction, which are individually adjustable in the radial length by a contact with the teeth (20) of the holder (12) and/or with a control cam (56).

10. Coil mat transfer station (60) for a production plant (62) for the production of a component of an electrical machine, the transfer station for transferring a linear coil mat (18) into a coiled state and comprising a coil mat receiving device (10) according to any one of claims 7 to 9 and a controller (34) configured to control the coil mat receiving device (10) for carrying out the coil mat receiving method according to any one of claims 1 to 5.

11. Controller (34) for a coil mat receiving device (10) according to any one of claims 7 to 9, wherein the controller (34) is configured to control the coil mat receiving device (10) for carrying out the coil mat receiving method according to any one of claims 1 to 5.

12. Computer program, comprising machine-readable instructions causing a coil mat receiving device (10) according to any one of claims 7 to 9 to carry out the coil mat receiving method according to any one of claims 1 to 5.

13. Production plant (62) for the production of a stator component provided with a coil winding, the production plant comprising
a coil mat transfer station (60) according to claim 10, wherein the rotary unit (14) is designed as a joining tool (40), and comprising means (70) for relatively inserting the joining tool (40) into an annular laminated core and for transferring the wound-up coil mat (18) from the joining tool (40) into the laminated core.

## Revendications

1. Procédé de réception de mats de bobines à réaliser au cours de la fabrication d'un composant d'une machine électrique pour recevoir un mat de bobines (18) d'un support allongé (12) et insérer le mat de bobines (18) dans un agencement annulaire (28) de rainures (30) qui s'ouvrent vers l'extérieur, le procédé comprenant les étapes:
a) fournir le mat de bobines (18) sur le support allongé (12) qui comporte une série de dents (20) séparées par des espaces (22), de telle sorte que des sections de fil droit (24) du mat de bobines (18) soient logées dans les espaces (22) entre les dents,
b) fournir une unité rotative (14) qui peut tourner autour d'un axe de rotation (26) et qui comporte l'agencement annulaire (28) de rainures (30) qui sont limitées par des éléments de limitation de rainures (32) qui s'étendent radialement avec au moins une composante directionnelle,
c) déplacer l'unité rotative (14) et le support (18) l'un par rapport à l'autre dans la direction longitudinale du support (12) et faire rouler l'unité rotative (14) à travers le support (12) de telle sorte que plusieurs rainures (30) avec plusieurs espaces entre les dents (22) soient alignées dans une zone de transfert (36 ) en forme d'arc afin de transférer les sections de fil (24) du mat de bobines (18) des espaces entre les dents (22) vers les rainures et de les guider pendant le transfert,
d) transférer les sections de fil droites (24) des espaces entre les dents (22) dans la zone de transfert (36) vers les rainures (30) alignées avec celles-ci,
**caractérisé en ce que** le procédé de réception de mats de bobines comprend l'étape consistant à:
e) ajuster
e1) la hauteur des dents (20) et/ou
e2) la longueur radiale des éléments de limitation des rainures (32)
dans la zone de transfert (36) de telle sorte que les hauteurs des dents (32) dans le cas e1) ou les longueurs des éléments de limitation de rainure (32) dans le cas e2) soient plus petites au centre (50) de la zone de transfert (36) qu'au niveau des zones de bord (52) de la zone de transfert (36).

2. Procédé de réception de mats de bobines selon la revendication 1, **caractérisé en ce que** l'étape a) comprend au moins une ou plusieurs étapes:
a1) fournir le support (12) comprenant de dents (20) mobiles dans une direction transversale à la direction longitudinale de telle sorte que la hauteur des dents (20) soit variable;
a2) fournir le support (12) sous la forme d'un râteau linéaire avec une structure en peigne qui comprend au moins une ou plusieurs rangées de dents (20) disposées côte à côte;
a3) fournir le support (12) comprenant d'actionneurs (52) pour déplacer différemment les dents (20) afin de régler individuellement leur hauteur,
a4) fournir le support (12) comprenant de dents (20) supportées de manière élastique de telle sorte que leur hauteur soit réglable individuellement par contact depuis l'extérieur.

3. Procédé de réception de mats de bobines selon l'une quelconque des revendications précédentes, **caractérisé en ce que** l'étape b) comprend:
fournir l'unité rotative (14) sous la forme d'un mandrin d'assemblage ou d'un outil d'assemblage (40), au moyen duquel le mat de bobines (18) réçu peut être transféré vers un composant (42) comportant des rainures de composant s'ouvrant vers l'intérieur.

4. Procédé de réception de mats de bobines selon l'une quelconque des revendications précédentes, **caractérisé en ce que**
l'étape e) comprend au moins une ou plusieurs des étapes:
e3) ajuster les hauteurs et/ou les longueurs de telle sorte qu'elles augmentent progressivement en taille à partir du centre (50) de la zone de transfert (36) lorsqu'on regarde vers l'extérieur,
e4) ajuster les hauteurs et/ou les longueurs de telle sorte que la longueur de l'arc de la zone de transfert (36) augmente par rapport à un état où les hauteurs ou les longueurs sont égales, ou que la distance entre les espaces entre les dents (22) et les rainures (30) diminue ou disparaisse vers l'extérieur de la zone de transfert (36),
e5) rétraction et/ou extension active des dents (20) et/ou des éléments de limitation des rainures (32);
e6) rétraction et/ou extension active des dents (20) et/ou des éléments de limitation de rainure (32) supportés de manière élastique pendant le mouvement relatif du support (12) et de l'unité rotative (14) plongeant dans le support et/ou de l'unité rotative (14) et du support (12) plongeant dans l'unité rotative.

5. Procédé de réception de mats de bobines selon l'une quelconque des revendications précédentes, **caractérisé en ce que** l'étape e)
5.1 comprend au moins une ou plusieurs étapes dans le cas e1):
e1a) l'extension des dents (20) à l'extérieur du centre (50) de la zone de transfert (36),
e1b) la rétraction des dents (20) au centre de la zone de transfert (36),
e1c) ajuster les hauteurs des dents (20) dans la zone de transfert (36), de telle sorte que les dents (20) soient d'autant plus étendues qu'elles sont éloignées du centre (50),
e1d) ajuster les hauteurs des dents (20) dans la zone de transfert (36), de telle sorte que les dents (20) soient d'autant plus rétractées qu'elles sont proches du centre (50); et
5.2 comprend au moins une ou plusieurs étapes dans le cas e2):
e2a) l'extension des éléments de limitation de rainure (32) à l'extérieur du centre (50) de la zone de transfert (36),
e2b) la rétraction des éléments de limitation de rainure (32) au centre de la zone de transfert (36),
e2c) ajuster les longueurs radiales des éléments de limitation de rainure (32) dans la zone de transfert (36), de sorte que les éléments de limitation de rainure (32) soient d'autant plus étendus qu'elles sont éloignés du centre (50),
e2d) ajuster les longueurs radiales des éléments de limitation de rainure (32) dans la zone de transfert (36), de telle sorte que les éléments de limitation de rainure (32) soient d'autant plus rétractés qu'elles sont proches du centre (50).

6. Procédé de fabrication d'un composant de stator comportant un mat de bobines, le procédé comprenant:
la mise en œuvre du procédé de réception de mats de bobines selon l'une quelconque des revendications précédentes pour insérer le mat de bobines (18) sur un outil d'assemblage (40), déplacer relativement l'outil d'assemblage (40) muni du mat de bobines (18) dans un composant annulaire (42) comportant un agencement de rainures de composant s'ouvrant vers l'intérieur et transférer le mat de bobines (18) de l'outil d'assemblage (40) dans le composant (42).

7. Dispositif de réception de mats de bobines (10) pour recevoir un mat de bobine (18) au cours de la fabrication d'un composant d'une machine électrique, le dispositif comprenant:
un support allongé (12) destiné à fournir et à maintenir un mat de bobines (18) disposé linéairement, lequel support (12) comprend une rangée de dents (20) avec des espaces (22) entre celles-ci, dans lesquels des sections de fil droit (24) du mat de bobines (18) peuvent être logées,
une unité rotative (14) qui peut tourner autour d'un axe de rotation (26) et qui présente un agencement annulaire (28) de rainures (30) ouvertes vers l'extérieur, dans lesquelles les sections de fil droites (24) peuvent être insérées et qui sont limitées par des éléments de limitation de rainure (32) s'étendant dans la direction radiale avec au moins une composante directionnelle,
un dispositif de déplacement (16) pour déplacer relativement l'unité rotative (14) et le support (12) dans la direction longitudinale du support (12) et pour faire rouler l'unité rotative (14) à travers le support (12), le dispositif de déplacement (16) étant configuré, lors du roulement de l'unité rotative (14) à travers le support (12) dans une zone de transfert (36), pour aligner plusieurs rainures (30) avec plusieurs espaces entre les dents (22) pour le transfert des sections de fil (24) et pour guider les sections de fil (24) lors du transfert,
**caractérisé en ce que**
aa) la hauteur des dents respectives (20) du support (12) dans la zone de transfert (36) et/ou
bb) la longueur radiale des éléments de limitation de rainure respectifs (32) dans la zone de transfert (36)
sont dans chaque cas réglables et adaptables individuellement pendant le roulement.

8. Dispositif de réception de mats de bobines (10) selon la revendication 7, **caractérisé en ce que** le support (12)
8.1 est conçu comme un râteau linéaire avec une structure en peigne qui comprend au moins une ou plusieurs rangées de dents (20) disposées côte à côte,
8.2 est conçu avec des dents (20) mobiles individuellement dans une direction transversale à l'extension longitudinale,
8.3 est déplaçable dans la direction longitudinale au moyen du dispositif de mouvement (16),
8.4 comprend des actionneurs (52) pour déplacer individuellement les dents (20) afin de régler leur hauteur, et/ou
8.5 comprend des dents (20) supportées de manière élastique qui sont réglables individuellement en hauteur par contact avec l'unité rotative (14) et/ou une came de commande (56).

9. Dispositif de réception de mats de bobines (10) selon l'une quelconque des revendications 7 ou 8, **caractérisé en ce que** l'unité rotative (14):
9.1 est conçue comme un mandrin d'assemblage ou un outil d'assemblage (40) pour insérer le mat de bobines (18) reçu dans des rainures de composant s'ouvrant vers l'intérieur d'un composant (42),
9.2 comprend des actionneurs (52) pour déplacer individuellement les éléments de limitation de rainure (32) et/ou
9.3 comprend des éléments de limitation de rainure (32) déplaçables élastiquement dans la direction radiale, qui sont réglables individuellement en longueur radiale par un contact avec les dents (20) du support (12) et/ou avec une came de commande (56).

10. Station de transfert de mats de bobines (60) pour une installation de production (62) destinée à la fabrication d'un composant d'une machine électrique, la station de transfert servant à transférer un mat de bobines (18) linéaire dans un état enroulé et comprenant un dispositif de réception de mats de bobines (10) selon l'une quelconque des revendications 7 à 9 et un dispositif de commande (34) configuré pour commander le dispositif de réception de mats de bobines (10) afin d'exécuter le procédé de réception de mats de bobines selon l'une quelconque des revendications 1 à 5.

11. Dispositif de commande (34) pour un dispositif de réception de mats de bobines (10) selon l'une quelconque des revendications 7 à 9, dans lequel le dispositif de commande (34) est configuré pour commander le dispositif de réception de mats de bobines (10) afin d'exécuter le procédé de réception de mats de bobines selon l'une quelconque des revendications 1 à 5.

12. Programme informatique, comprenant des instructions lisibles par machine qui amènent un dispositif de réception de mats de bobines (10) selon l'une quelconque des revendications 7 à 9 à mettre en œuvre le procédé de réception de mats de bobines selon l'une quelconque des revendications 1 à 5.

13. Installation de production (62) pour la production d'un composant de stator muni d'un mat de bobines, l'installation de production comprenant une station de transfert de mats de bobines (60) selon la revendication 10, dans laquelle l'unité rotative (14) est conçue comme un outil d'assemblage (40), et comprenant des moyens (70) pour insérer de manière relative l'outil d'assemblage (40) dans un noyau laminé annulaire et pour transférer le mat de bobines enroulé (18) de l'outil d'assemblage (40) dans le noyau laminé.
